Europäisches Patentamt

European Patent Office

Office européen des brevets

(19)

(11) Veröffentlichungsnummer: **0 030 999**
**B1**

(12) # EUROPÄISCHE PATENTSCHRIFT

(45) Veröffentlichungstag der Patentschrift:
04.09.85

(21) Anmeldenummer: 80105446.1

(22) Anmeldetag: 12.09.80

(51) Int. Cl.⁴: **C 08 F 265/06, C 08 F 2/22,**
**C 08 F 285/00 // (C08F285/00,**
**220:12)**

(54) Schlagzähe Harze und ihre Herstellung.

(30) Priorität: 19.12.79 DE 2951045

(43) Veröffentlichungstag der Anmeldung:
01.07.81 Patentblatt 81/26

(45) Bekanntmachung des Hinweises auf die Patenterteilung:
04.09.85 Patentblatt 85/36

(84) Benannte Vertragsstaaten:
FR GB IT SE

(56) Entgegenhaltungen:
FR - A - 2 010 217
FR - A - 2 061 180
FR - A - 2 069 007
FR - A - 2 084 780
US - A - 3 661 994
US - A - 3 971 835

Die Akte enthält technische Angaben, die nach dem
Eingang der Anmeldung eingereicht wurden und die
nicht in dieser Patentschrift enthalten sind.

(73) Patentinhaber: **Röhm GmbH, Kirschenallee**
**Postfach 4242, D-6100 Darmstadt 1 (DE)**

(72) Erfinder: **Heil, Ernst, Sudetenstrasse 4,**
**D-6081 Stockstadt/Rh. (DE)**
Erfinder: **Wenzel, Franz, Dr., Zeyherweg 5,**
**D-6100 Darmstadt (DE)**
Erfinder: **Arndt, Peter Joseph, Dr., Im Säbchen 9,**
**D-6104 Seeheim-Jugenheim 2 (DE)**
Erfinder: **Schellhaas, Walter, Obergasse 4,**
**D-6144 Zwingenberg (DE)**

## Beschreibung

Die Erfindung betrifft ein Verfahren zur kontinuierlichen Herstellung schlagzäher Harze als schlagzähe Komponente von Polymethacrylat-Formmassen mittels Emulsionspolymerisation, ausgehend von einem Saatlatex durch Aufpolymerisieren einer Zähphase und anschliessendem Aufpolymerisieren einer härteren Schale. Zur Herstellung schlagzäher Modifikationen von Polymerisaten bzw. Copolymerisaten von äthylenisch ungesättigten Monomeren sind in der Technik verschiedene Wege eingeschlagen worden.

In der DE-AS 1 520 122 wird ein Verfahren zur Herstellung von Suspensionspolymerisaten durch Polymerisation von polymerisierbaren, äthylenisch ungesättigten Monomeren in wässriger Dispersion in Gegenwart von monomerlöslichen Katalysatoren, Dispergiermitteln sowie in Gegenwart eines Polymerisat- oder Mischpolymerisatlatex vorgeschlagen. Dabei kann der Monomerenanteil aus einem Alkylacrylat mit 1–8 Kohlenstoffatomen im Alkylteil in Anteilen von 1 bis 50 Gew.-%, (bezogen auf das fertige Polymerisat), zusammen mit 0 bis 50 Gew.-%, (bezogen auf das Alkylacrylat eines anderen monoäthylenisch ungesättigten Comonomeren) und 0,01 bis 10 Gew.-%, (bezogen auf die Gesamtmenge der Monoäthylenisch ungesättigten Verbindungen), einer mehrfach olefinisch ungesättigten Verbindung bestehen.

Der Mischpolymerisat-Latex besteht nach der genannten DE-AS aus Methylmethacrylat, Styrol, einem substituierten Styrol oder Acrylnitril bzw. deren Gemisch 0 bis 50 Gew.-%, (bezogen auf den Gesamtmonomerengehalt des Latex), einer weiteren, mischpolymerisierbaren, monoäthylenisch ungesättigten Verbindung und 0 bis 50 Gew.-%, (bezogen auf den Gesamtmonomerengehalt des Latex), an einer mehrfach olefinisch ungesättigten Verbindung.

Ein Verfahren zur Herstellung eines Kern-Schalen-Polymerisats, bei dem in einem ersten Verfahrensschritt nach dem Emulsionspolymerisationsverfahren ein vernetztes Polystyrol von einer Teilchengrösse > 0,8 μm hergestellt und dieses in einem zweiten Verfahrensschritt im Wege der Pfropfpolymerisation mit einer Schale aus Polymethylmethacrylat oder aus einem zum überwiegenden Teil aus Methylmethacrylat aufgebauten Copolymerisat umhüllt wird, ist in der DE-OS 2 264 224 vorgeschlagen.

In der genannten DE-OS wird darauf hingewiesen, dass die nach dem Verfahren hergestellten Copolymerisate sich leicht und in gleichmässiger Verteilung dispergieren lassen, und dass sie diese ideale Verteilung auch nach Verarbeitung der Formmasse durch Extrusion oder Spritzgiessen beibehalten.

Aus der US-A 3 661 994 ist ein Emulsionspolymerisationsverfahren bekannt, bei dem auf einen harten Polymerisatkern eine Zähphase aufpolymerisiert wird. Das so erhaltene Polymerisat wird als Endprodukt behandelt oder es wird noch eine äussere Hartschale aufpolymerisiert. Das konkret angegebene Verfahren lässt eine kontinuierliche Durchführung nicht zu. Im Einklang mit dem übrigen Stand der Technik ist bei dem Aufpolymerisieren der Zähphase von einem möglichst vollständigen Umsatz auszugehen. Es war in keiner Weise vorauszusehen, dass die Umsetzung zu 80–95% in der zweiten Polymerisationsstufe einen vorteilhaften Einfluss auf die VICAT-Erweichungstemperatur des Endprodukts nach sich ziehen würde.

Die Verfahren des Standes der Technik konnten indessen nicht voll befriedigen. Insbesondere war die Aufgabe, Verfahren zur kontinuierlichen Herstellung von schlagzäh modifiziertem Methylmethacrylat, beispielsweise Methylmethacrylat-Formmassen mit Butylacrylat-Styrol-Zähphase, im betrieblichen Massstab zu entwickeln, nicht überzeugend gelöst worden.

Zu den Problemen, die einer kontinuierlichen technischen Realisierung im Wege stehen, gehört z.B. die relativ geringe Reaktionsgeschwindigkeit des in der Zähphase enthaltenen Styrols, die wiederum die Gesamtdurchsatzgeschwindigkeit bestimmt. Zur Steigerung der Reaktionsgeschwindigkeit auf einen hinreichenden Wert bietet sich eine Erhöhung der Initiatorkonzentrationen an. Gleichzeitig ergibt sich die Notwendigkeit, mit einer hohen Konzentration an Emulgatoren zu arbeiten. Zur kontinuierlichen Durchführung kommt beispielsweise die Umsetzung in mehreren, hintereinander geschalteten Reaktoren, z.B. in einer Rührkesselkaskade, in Betracht.

Unter den genannten Bedingungen lassen sich Produkte herstellen, die eine befriedigende Schlagzähigkeit und Vicat-Erweichungstemperatur, aber relativ niedrige Kerbschlagzähigkeit haben. Die optischen Eigenschaften derartiger Produkte sind hauptsächlich wohl wegen der hohen angewendeten Emulgator- und Initiatorkonzentrationen und vermutlich infolge einer durch Rückvermischung bedingten Phasengrössenverteilung verbesserungsbedürftig.

Es wurde nun gefunden, dass sich Schlagzähkomponenten für schlagzähes Polymethacrylat durch Emulsionspolymerisation in kontinuierlicher Verfahrensweise herstellen lassen, die den Anforderungen der Technik in besonderer Weise gerecht werden, wenn man einen Reaktor (Reaktor 1) mit einem Saatlatex A und einem Initiator I beschickt und unter Zusatz eines Emulgators E die Monomerenkomponente B zudosiert, die hinsichtlich ihrer Gesamtwirkung weiche Monomere enthält, nach Erreichen eines Polymerisationsumsatzes bezogen auf die eingesetzten Monomeren von 80 bis 95%, bezogen auf die Monomerenkomponente B, das Reaktionsgemisch (Zähphase) in einen zweiten Reaktor (Reaktor 2) überführt, und ohne weiteren Zusatz von Emulgatoren im gesamten Verlauf des Verfahrens dann als härtere Komponente C ein oder mehrere Acrylat- und/oder Methacrylat-Monomere zusetzt, deren Polymere bzw. Copolymere eine Tg (dyn) nach DIN 7724 von wenigstens 45°C aufweisen und unter Zusatz eines Initiators I' aufpolymerisiert und die erhaltene Dispersion in an sich bekannter Weise aufarbeitet.

Der Saatlatex A ist seiner polymeren Zusammensetzung nach nicht unbedingt kritisch. Er kann vorteilhafterweise aus einem Polymeren bestehen, das durch (Co)-polymerisation von Alkylacrylaten bzw. -Methacrylaten mit 1 bis 4 Kohlenstoffatomen im Alkylrest, gegebenenfalls mit bis zu 30 Gew.-% eines anderen copolymerisierbaren Monomeren hergestellt wird. Vorteilhafterweise wird einer der üblichen Vernetzer, z.B. eine Acrylverbindung mit mindestens zwei reaktiven Vinyldoppelbindungen, mitverwendet. Genannt seien z.B. 1,4-Butandioldimethacrylat, Äthylendimethacrylat, Glykoldimethacrylat, Triglykoldimethacrylat, Trimethylolpropantrimethacrylat oder Allylverbindungen, wie Allylmethacrylat oder Allylcyanurat. In der Regel wird der Saatlatex eine Tg (dyn) von > 45°C besitzen. (Tg (dyn) ist gemäss DIN 7724 zu bestimmen.)

Im Hinblick auf die in der Mehrheit der Fälle anzustrebenden optischen Qualitäten der schlagzähen Harze, muss auf die Angleichung der Brechungsindices der einzelnen Polymerkomponenten geachtet werden. Vorteilhafterweise liegt beim Saatlatex A die mittlere Teilchengrösse unterhalb 5 nm.

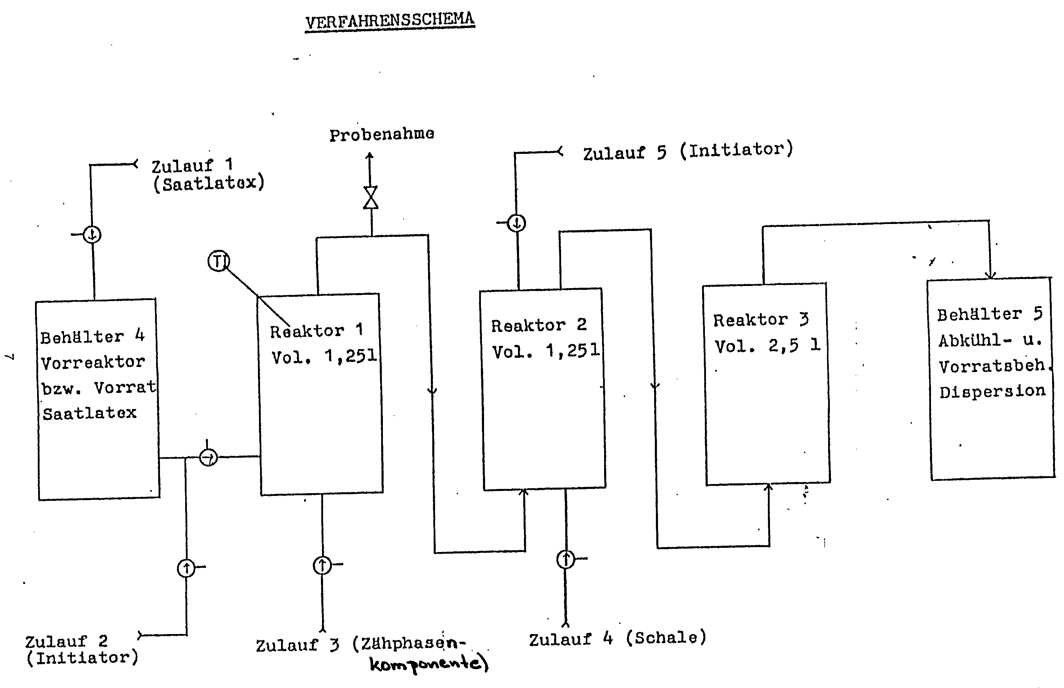

Nach einer bevorzugten Ausführungsform kann der Saatlatex ein Polymerisat aus Methylmethacrylat und 0,5–5, speziell etwa 1 Gew.-% eines Vernetzers wie 1,4-Butandioldimethacrylat darstellen. Als Richtwert für den Anteil der Monomeren im wässrigen Polymerisationsansatz kann beim Saatlatex ca. 5 Gew.-% gelten. Der Saatlatex-Anteil kann beispielsweise 0,5 bis 10 Gew.-%, bezogen auf das gesamte schlagzähe Harz, ausmachen. Die Herstellung der Saatlatex A kann in an sich bekannter Weise durch Emulsionspolymerisation der Monomeren in wässrigem Medium, in Gegenwart von Emulgatoren, wie z.B. Fettalkoholsulfaten (Natriumlaurylsulfat) und geeigneten Initiatoren wie Kalium- oder Ammoniumperoxydisulfat vorgenommen werden. Die Saatlatex-Emulsion kann im Vorreaktor kontinuierlich hergestellt bzw. in einem geeigneten Vorratsgefäss (4) gehalten und von dort der Reaktor (1) beschickt werden. (Die vorstehend und im folgenden in Klammern angegebenen Zahlen beziehen sich auf die Elemente der Zeichnung.)

Die Monomerenkomponente B soll hinsichtlich ihrer Gesamtwirkung «weiche» Monomere enthalten. In erster Linie kommen hierfür Alkylacrylate mit 1 bis 4 Kohlenstoffatomen im Alkylrest infrage. Der Anteil und die Art der Alkylacrylate an der Komponente B ist so bemessen, dass ein Polymerisat mit einer Tg (Dyn) nach DIN 7724 von < 45°C entsteht. In der Regel macht der Anteil 70–90 Gew.-%, vorzugsweise 75–80 Gew.-% an der Komponente B, aus. Besonders bevorzugt ist Butylacrylat. Weiter kann die Komponente B Alkylmethacrylate mit 1 bis 4 Kohlenstoffatomen im Alkylrest in Anteilen von 0 bis 10 Gew.-% und daneben Styrol und/oder niederalkylsubstituiertes Styrol in Anteilen von 5 bis 30 Gew.-% enthalten. Bevorzugt ist die gleichzeitige Anwesenheit von ca. 3 bis 7 Gew.-% Methylmethacrylat, speziell ca. 5 Gew.-% und von 10 bis 20 Gew.-% Styrol, speziell ca. 15 Gew.-%, bezogen auf die gesamte Komponente B. Vorteilhaft ist ferner die Anwendung von Vernetzern, z.B. der vorstehend beschriebenen Art in Anteilen von 1 bis 3 Gew.-%, bevorzugt von 1,4-Butandioldimethacrylat. Weiter können gegebenenfalls andere Monomere wie z.B. Hydroxyniederalkylacrylate und/oder -Methacrylate in Anteilen bis zu 10 Gew.-% zugesetzt werden. Zweckmässig wird im Zuge des erfindungsgemässen Verfahrens die Komponente B zu dem vorgelegten Saatlatex im Reaktor (1), dem bereits der Initiator I zugefügt wurde, in wässriger Emulsion zudosiert.

Als Anhalt kann man davon ausgehen, dass die wässrige Emulsion der Komponente B um die 40 Gew.-% an Monomeren enthält. Als Emulgatoren E können z.B. Fettalkoholsulfate, wie Natriumlaurylsulfat, verwendet werden. Der Anteil an Emulgator liegt vorteilhaft zwischen 0,01 und 3 Gew.-%, vorzugsweise 0,05 bis 0,5 Gew.-%, bezogen auf den Wasseranteil. Als Initiator I wird vorteilhaft Natrium- oder insbesondere Kaliumperoxydisulfat, zweckmässig in sehr schwachalkalischer Lösung in Konzentrationen von 0,001 bis 0,008 Mol, vorzugsweise 0,001 bis 0,005, insbesondere 0,003 Mol, eingesetzt. Es können auch die an sich bekannten Redox-Katalysatorensysteme, wie z.B. Persulfat in Kombination mit Natriumbisulfit, Rongalit, Ascorbinsäure u.ä. verwendet werden. Zweckmässig kann die wässrige Emulsion durch Zugabe schwacher Lauge auf einen pH von ca. 6 bis 8 gestellt werden. Als Lauge kann z.B. 0,5 n NaOH oder KOH verwendet werden. Die Zugabe der Komponente B wird vorteilhaft so bemessen, dass ihr Anteil als Polymerisat an dem schlagzähen Harz 30–80 Gew.-% ausmacht.

Die Polymerisation der Zähphase im Reaktor (1) wird bei 40 bis 95°C bis zu einem Polymerisationsumsatz bezogen auf die eingesetzten Monomeren von 80 bis 95% fortgesetzt, dann wird die Zähphase in einen weiteren Reaktor (2) überführt und ein oder mehrere Acrylat- und/oder Methacrylatmonomere, die in Polymerisatform eine Tg (dyn) nach DIN 7724 von wenigstens 45°C aufweisen als «härtere» Komponente C zugegeben und vorzugsweise anschliessend ein Initiator I' zugesetzt. Als Monomeres der Komponente C wird vorzugsweise Methylmethacrylat, gegebenenfalls unter Mitverwendung von geeigneten Comonomeren, wie z.B. Äthylacrylat verwendet. In der Regel beträgt der Anteil an Methylmethacrylat an der äusseren Schale mindestens 90 Gew.-%. Der Anteil der äusseren Schale im erfindungsgemäss herzustellenden schlagzähen Harz kann im Bereich von etwa 10 bis 30 Gew.-% liegen. Gleichzeitig mit dem Schalenmaterial der Komponente C können noch an sich bekannte Zusätze wie Stabilisatoren u.ä. zugegeben werden. Genannt seien z.B. thermische Stabilisatoren, wie etwa sterisch gehinderte Phenole. Vorzugsweise wird jedoch kein weiterer Emulgator zugesetzt. Der Initiator I' entspricht hinsichtlich seiner chemischen Natur dem Initiator I. Auch hier wird zweckmässig eine sehr schwach alkalische Lösung verwendet.

Die Konzentration an Initiator I' liegt vorzugsweise im Bereich von 0,0001 bis 0,001 Mol, insbe-

sondere bei 0,0003 Mol. Die Polymerisation der Schale kann im Temperaturbereich von 40 bis 95 °C vorgenommen werden. Dabei wird der untere Temperaturbereich vorzugsweise bei Verwendung eines Redoxsystems, im übrigen der obere Temperaturbereich eingehalten. Nach Abschluss des Polymerisationsvorgangs kann die erhaltene Dispersion des schlagzähen Materials in einen Abkühl- bzw. Vorratsbehälter (5) geleitet werden. Die weitere Verarbeitung kann in an sich bekannter Weise erfolgen. -

Nach vorliegenden Erfahrungen muss insbesondere die Einhaltung eines Polymerisationsgrades zwischen 80 und 95% für die Zähphase vor dem Aufpolymerisieren der Schalenkomponente C als kritisch für die angestrebten physikalischen Eigenschaften des schlagzähen Harzes angesehen werden. So scheint z.B. die Einstellung einer Vicaterweichungstemperatur von > 90 °C mit der Einhaltung dieser Bedingung im Zusammenhang zu stehen.

Die erfindungsgemäss hergestellten schlagzähen Harze zeichnen sich im weiteren durch eine günstige Schlagzähigkeit und Kerbschlagzähigkeit aus. Hervorzuheben sind die günstigen optischen Eigenschaften des erfindungsgemäss hergestellten Materials, die besonders nach dem Abmischen mit Acrylglas (PMMA) zum Tragen kommen. In diesem Zusammenhang scheint es von Bedeutung zu sein, dass die Anwendung von Emulgator und in zweiter Linie Initiator konsequent auf die oben angegebenen, unbedingt erforderlichen Quantitäten beschränkt wird.

Das nachfolgende Beispiel dient zur Erläuterung der erfindungsgemässen Verfahrens, soll aber den nachgesuchten Schutz in keiner Weise beschränken.

Beispiel

Die Elemente der Polymerisationsapparatur sind der Vorratsbehälter (4) beliebiger Grösse für den Saatlatex, eine dreistufige Rührkesselkaskade mit Reaktor (1) und Reaktor (2) von jeweils einem Volumen von 1,25 l Inhalt und Reaktor (3) von einem Volumen von 2,5 l Inhalt sowie ein Behälter (5) beliebiger Grösse zum Aufnehmen der fertigen Dispersion. In den Vorratsbehälter (4) für den Saatlatex wird ein Emulsionspolymerisat vorgelegt, das zuvor durch Polymerisation bei 80 °C einer wässrigen Emulsion aus Wasser, Methylmethacrylat (MMA), Butandioldimethacrylat (BDMA), Natriumlaurylsulfat (NaLS) und Kaliumperoxidisulfat (KPS) im Verhältnis 94,8:5,05:0,05:0,1:0,003 Teile hergestellt wurde. Dieser Saatlatex wird in einer Menge von 299 g/h (Zulauf 1) nach Zumischung von 101 g/h (Zulauf 2) einer Initiatorlösung aus Wasser, KPS und 0,5 n NaOH im Verhältnis 96,5:0,85:2,6 Teile in den bei 85–95 °C betriebenen Reaktor (1) dosiert unter gleichzeitiger Zugabe von 850 g/h (Zulauf 3) einer wässrigen Emulsion aus Wasser, Butylacrylat, Styrol, MMA, BDMA, NaLS und 0,5 n NaOH im Verhältnis 57,5:33,01:6,77:1,95:0,64:0,005:0,1 Teile als Zähphasenkomponente. Durch Temperaturführung (TI) wird die Polymerisation so gesteuert, dass das aus Reaktor (1) mit einer Menge von 1250 g/h entstehende Reaktionsgemisch, bezogen auf die eingesetzten Monomeren, einen Polymerisationsumsatz von > 80 < 95% hat, bevor es in den gleichfalls bei ca. 90 °C betriebenen Rührkesselreaktor (22) eintritt und durch Zugabe von 360 g/h (Zulauf 4) einer Monomerenmischung aus MMA und Thioglykolsäure-2-äthylhexylester im Verhältnis 99,8:0,2 Teile und von 840 g/h (Zulauf 5) einer Initiatorlösung aus Wasser, KPS und 0,5 n NaOH im Verhältnis 99,67:0,08:0,25 Teile die Schale aufpolymerisiert wird. Aus Reaktor (2) gelangt das Polymerisatgemisch mit einer Menge von nunmehr 2450 g/h in den ebenfalls bei 90 °C betriebenen Rührkesselreaktor (3) zur Nachpolymerisation, aus dem es als 30%ige Dispersion mit einem Umsatz > 99,5%, bezogen auf die eingesetzten Monomeren, in den Abkühl- und Dispersionsvorratsbehälter (5) übergeführt wird. Die so hergestellte Dispersion wird in bekannter Weise durch z.B. Sprühtrocknung, Koagulieren durch Elektrolyte und/oder Scheren zur Gewinnung des Harzes aufgearbeitet.

Alternativ zu dem beschriebenen Verfahren kann der Saatlatex auch kontinuierlich hergestellt werden. In diesem Fall wird Behälter (4) als Vorreaktor bei 90° betrieben, in dem kontinuierlich 299 g/h (Zulauf 1) einer Monomerenemulsion aus Wasser, MMA, BDMA, NaLS und KPS im Verhältnis 94,8:5,05:0,05:0,1:0,003 Teile polymerisiert und nach Mischung mit Zulauf (2) – wie oben beschrieben – dem Reaktor (1) zugeführt werden.

**Patentansprüche**

1. Verfahren zur kontinuierlichen Herstellung schlagzäher Harze als Komponente für schlagzähe Polymethacrylat-Formmassen mittels Emulsionspolymerisation, ausgehend von einem Saatlatex durch Aufpolymerisieren von ihrer Gesamtwirkung nach weichen Monomeren zu einer Zähphase und anschliessendem Aufpolymerisieren von damit verträglichen härteren Monomeren als Schale, dadurch gekennzeichnet, dass man einen Reaktor mit dem Saatlatex A und einem Initiator I beschickt und in Anwesenheit eines Emulgators E die hinsichtlich ihrer Gesamtwirkung weiche Monomere enthaltende Komponente B zudosiert, nach Erreichen eines Polymerisationsumsatzes bezogen auf die eingesetzten Monomeren von 80 bis 95% die erhaltene Zähphase in einen weiteren Reaktor überführt und ohne weiteren Emulgatorenzusatz als härtere Komponente C ein oder mehrere Acrylat- und/oder Methacrylat-Monomere zusetzt, die in Polymerisatform ein $T_g$ (dyn) nach DIN 7724 von wenigstens 45 °C aufweisen und unter Zusatz eines Initiators I' aufpolymerisiert und die erhaltene Dispersion in an sich bekannter Weise aufarbeitet.

2. Verfahren gemäss Anspruch 1, dadurch gekennzeichnet, dass man als Saatlatex A ein Acrylat- und/oder Methacrylat-Polymeres oder Copolymeres verwendet, das durch Emulsionspolymerisation von Alkylacrylaten und/oder Alkylmethacrylaten mit 1 bis 4 Kohlenstoffatomen im Alkylrest zusammen mit 0 bis 30 Gew.-% eines anderen copolymerisierbaren Monomeren hergestellt wurde.

3. Verfahren gemäss den Ansprüchen 1 und 2, dadurch gekennzeichnet, dass man als Saatlatex A ein Copolymeres aus Methylmethacrylat und 0,1 bis 5 Gew.-% eines vernetzenden Monomeren verwendet.

4. Verfahren gemäss Anspruch 1, dadurch gekennzeichnet, dass der Polymerisatgehalt des Saatlatex A 0,5 bis 10 Gew.-%, vorzugsweise 1 bis 5 Gew.-%, bezogen auf das gesamte schlagzähe Harz, ausmacht.

5. Verfahren gemäss Anspruch 1, dadurch gekennzeichnet, dass als hinsichtlich ihrer Gesamtwirkung weiche Monomere der Komponente B Alkylacrylate mit 1 bis 4 Kohlenstoffatomen im Alkylrest, in Anteilen von ca. 70 bis 90 Gew.-% (vorzugsweise 75–80 Gew.-%) Alkylmethacrylate mit 1 bis 4 Kohlenstoffatomen im Alkylrest in Anteilen von 0 bis 10 Gew.-% und daneben Styrol, niederalkylsubstituiertes Styrol in Anteilen von 5 bis 30 Gew.-% und gegebenenfalls andere Monomere in Anteilen von 0 bis 10 Gew.-%, alle bezogen auf die Gesamtheit der Monomeren der Komponente B, verwendet werden.

6. Verfahren gemäss Anspruch 5, dadurch gekennzeichnet, dass als Alkylacrylat 75–80 Gew.-% Butylacrylat, als Alkylmethacrylat 2–10 Gew.-% Methylmethacrylat, 10–20 Gew.-% Styrol und 1 bis 3 Gew.-% eines Vernetzers verwendet werden.

7. Verfahren gemäss Anspruch 1, dadurch gekennzeichnet, dass der Anteil der Komponente B an dem schlagzähen Harz 30–80 Gew.-% beträgt.

8. Verfahren gemäss Anspruch 1, dadurch gekennzeichnet, dass als Monomeres der Komponente C Methylmethacrylat verwendet wird.

9. Schlagzähe Harze hergestellt nach dem Verfahren gemäss den Ansprüchen 1 bis 8, dadurch gekennzeichnet, dass sie eine Vicaterweichungstemperatur von > 90 °C besitzen.

**Claims**

1. Process for continuously producing high impact strength resins as components for high impact strength polymethacrylate moulding compositions by emulsion polymerisation, starting from a seed latex by polymerising monomers which are soft, in their total activity, to form a viscous phase and subsequently polymerising harder monomers compatible therewith to form a shell, characterised in that a reactor is charged with the seed latex A and an initiator I and in the presence of an emulsifier E the component B containing monomers which are soft in their total effect is metered in and after a polymerisation conversion of from 80 to 95%, based on the monomer used, has been achieved, the resulting viscous phase is transferred to another reactor and without any further addition of emulsifier one or more acrylate and/or methacrylate monomers are added as the harder component C, which in polymer form have a Tg (dyn) according to DIN 7724 of at least 45 °C, and with the addition of an initiator I' polymerisation is carried out and the resulting dispersion is worked up in a manner known per se.

2. Process as claimed in claim 1, characterised in that an acrylate and/or methacrylate polymer or copolymer which has been obtained by emulsion polymerisation of alkylacrylates and/or alkylmethacrylates containing 1 to 4 carbon atoms in the alkyl moiety together with 0 to 30% by weight of another copolymerisable monomer is used as the seed latex A.

3. Process as claimed in claims 1 and 2, characterised in that a copolymer of methylmethacrylate and 0.1 to 5% by weight of a cross-linking monomer is used as the seed latex A.

4. Process as claimed in claim 1, characterised in that the polymer content of the seed latex A constitutes 0.5 to 10% by weight, preferably 1 to 5% by weight, based on the total high impact strength resin.

5. Process as claimed in claim 1, characterised in that the monomers of component B which are soft in their overall activity are alkylacrylates containing 1 to 4 carbon atoms in the alkyl moiety, in amounts of about 70 to 90% by weight, preferably 75–80% by weight, alkylmethacrylates containing 1 to 4 carbon atoms in the alkyl moiety in amounts of from 0 to 10% by weight, and also styrene, lower alkyl-substituted styrene in amounts of from 5 to 30% by weight and optionally other monomers in amounts of from 0 to 10% by weight, all based on the total monomers of component B.

6. Process as claimed in claim 5, characterised in that 75–80% by weight of butylacrylate are used as the alkylacrylate, 2–10% by weight of methylmethacrylate are used as the alkylmethacrylate, 10–20% by weight of styrene and 1 to 3% by weight of a cross-linker are used.

7. Process as claimed in claim 1, characterised in that the proportion of component B in the high impact strength resin is from 30–80% by weight.

8. Process as claimed in claim 1, characterised in that methylmethacrylate is used as the monomer of component C.

9. High impact strength resins prepared by the process as claimed in claims 1 to 8, characterised in that they have a Vicat softening temperature of 90 °C.

**Revendications**

1. Procédé pour la préparation en continu de résines résistantes aux chocs, servant de composants de résilience pour des matières à mouler de polyméthacrylate résistantes aux chocs, au moyen de polymérisation en émulsion, à partir d'un latex-germe, par polymérisation ultérieure de monomères souples en ce qui concerne leur effet global en vue de l'obtention d'une phase visqueuse, puis polymérisation ultérieure de monomères plus durs, compatibles avec cette phase, en tant qu'enveloppe, caractérisé en ce qu'on charge un réacteur avec le latex-germe A et un initiateur I et, en présence d'un émulsionnant E, on ajoute le composant B qui contient les monomères souples en ce qui concerne leur effet global, puis, après qu'a été atteint un degré de transformation par polymérisation de 80 à 95% par rapport aux monomères mis en réaction, on transfère la phase visqueuse obtenue dans un autre réacteur et, sans autre addition d'émulsionnant, on ajoute, en tant que composant plus dur C, un ou plusieurs monomères acrylate et/ou méthacrylate qui, sous forme de polymère, présentent une Tg (dyn) suivant la DIN 7724 de moins de 45°C et on polymérise avec addition d'un initiateur I', puis la dispersion obtenue est soumise à un traitement ultérieur en soi connu.

2. Procédé selon la revendication 1, caractérisé en ce qu'on utilise, comme latex-germe A, un polymère ou copolymère d'acrylate et/ou de méthacrylate qui a été préparé par polymérisation en émulsion d'acrylates d'alkyles et/ou de méthacrylates d'alkyles comportant 1 à 4 atomes de carbone dans le radical alkyle, avec 0 à 30% en poids d'un autre monomère copolymérisable.

3. Procédé selon la revendication 1 ou 2, caractérisé en ce qu'on utilise, comme latex-germe A, un copolymère de méthacrylate de méthyle et de 0,1 à 5% en poids d'un monomère réticulant.

4. Procédé selon la revendication 1, caractérisé en ce que la teneur en polymère du latex-germe A représente 0,5 à 10% en poids, de préférence 1 à 5% en poids, par rapport à la résine résistante aux chocs totale.

5. Procédé selon la revendication 1, caractérisé en ce qu'on utilise, comme monomères du composant B, souples en ce qui concerne leur effet global, des acrylates d'alkyles comportant 1 à 4 atomes de carbone dans le radical alkyle dans des proportions d'environ 70 à 90% en poids (de préférence 75 à 80% en poids), des méthacrylates d'alkyles comportant 1 à 4 atomes de carbone dans le radical alkyle dans des proportions de 0 à 10% en poids et, en outre, du styrène, des styrènes substitués par des radicaux alkyle inférieur dans des proportions de 5 à 30% en poids et, le cas échéant, d'autres monomères dans des proportions de 0 à 10% en poids, le tout par rapport à la totalité des monomères du composant B.

6. Procédé selon la revendication 5, caractérisé en ce qu'on utilise, en tant qu'acrylate d'alkyle, 75 à 80% en poids d'acrylate de butyle, en tant que méthacrylate d'alkyle, 2 à 10% en poids de méthacrylate de méthyle, 10 à 20% en poids de styrène et 1 à 3% en poids d'un réticulant.

7. Procédé selon la revendication 1, caractérisé en ce que la proportion du composant B dans la résine résistante aux chocs est de 30 à 80% en poids.

8. Procédé selon la revendication 1, caractérisé en ce qu'on utilise le méthacrylate de méthyle comme monomère du composant C.

9. Résines résistantes aux chocs préparées d'après le procédé suivant l'une quelconque des revendications 1 à 8, caractérisés en ce qu'ils ont un point de ramollissement de Vicat de plus de 90°C.

## VERFAHRENSSCHEMA

Probenahme

Zulauf 1
(Saatlatex)

Zulauf 5 (Initiator)

Behälter 4
Vorreaktor
bzw. Vorrat
Saatlatex

Reaktor 1
Vol. 1,25 l

Reaktor 2
Vol. 1,25 l

Reaktor 3
Vol. 2,5 l

Behälter 5
Abkühl- u.
Vorratsbeh.
Dispersion

0 030 999

Zulauf 2
(Initiator)

Zulauf 3 (Zähphasenkomponente)

Zulauf 4 (Schale)